# EUROPÄISCHE PATENTSCHRIFT

(11) **EP 1 479 506 B1**
(45) Veröffentlichungstag und Bekanntmachung des Hinweises auf die Patenterteilung: **24.08.2005**
(21) Anmeldenummer: 03011610.7
(22) Anmeldetag: 22.05.2003
(51) Int. Cl.: B29C 65/16, B23K 26/06

(54) **Laserfügeverfahren für strukturierte Kunststoffe**
Laser welding method for structured plastics
Procédé de soudage pour des plastiques structurés

(43) Veröffentlichungstag der Anmeldung: 24.11.2004
(73) Patentinhaber: Leister Process Technologies, 6060 Sarnen (CH)
(72) Erfinder: Chen, Jie-Wei, 6055 Alpnach Dorf (CH); Dänzer, Andreas, 6064 Kerns (CH)
(74) Vertreter: Klocke, Peter

(56) Entgegenhaltungen:
- EP-A- 0 997 261
- US-B1- 6 465 757

## Beschreibung

Die vorliegende Erfindung betrifft ein Laserfügeverfahren zum Verbinden von verschiedenen Werkstücken aus Kunststoff oder Kunststoff mit anderen Materialien, wobei das obere, der Laserquelle zugewandte Werkstück aus einem für den Laserstrahl transparenten Material und das zweite Werkstück aus einem für den Laserstrahl absorbierenden Material besteht, so dass die aneinander grenzenden Kontaktflächen der beiden Werkstücke aufschmelzen und bei der anschließenden Abkühlung unter Druck sich miteinander verbinden.

Ein derartiges Verfahren ist beispielsweise aus der EP-A1-997 261 bekannt. Bei diesem Verfahren wird ein vorhangartiger Laserstrahl auf die Werkstücke gerichtet, wobei der Bereich, der nicht erwärmt werden soll, mittels einer Maske abgedeckt wird. Mit dem bekannten Verfahren werden strukturierte und nicht strukturierte Werkstücke verbunden. Ein Verschweißen der beiden Werkstücke soll nur an den sich berührenden Kontaktflächen erfolgen, so dass aus diesem Grunde eine entsprechende Maske verwendet wird.

Das Schweißen von Kunststoffen mittels Laserstrahl benötigt eine steuerbare Wärmeenergiedosierung. Der entscheidende Faktor für diese Dosierung ist die Energiedichte und die Bestrahlungsdauer, die die Schnelligkeit des Aufwärmungsprozesses und die maximale erreichbare Temperatur des Kunststoffes bestimmen.

Eine flächige Schweißung mit gewünschten, den Werkstücken entsprechenden Schweißstrukturen kann durch das bekannte vorstehend erwähnte Maskenschweißprinzip realisiert werden. Dabei wird die gewünschte Fläche mit einer vorhangartigen Laserstrahlung, die auf der Schweißebene eine Linie abbildet, abgefahren, wobei die Energiedosierung durch die Laserleistung und die Rastergeschwindigkeit gesteuert wird. Die räumliche Verteilung der Wärmeenergie wird durch die Maske bestimmt, weil bei einer vorhangartigen Strahlung die Energiedichte entlang der Ausbreitungsrichtung des Lichts nahezu unverändert bleibt. Deshalb müssen die Stellen auf dem Bauteil, die in unterschiedlicher Höhe liegen und nicht bestrahlt werden dürfen, durch eine Maske abgedeckt werden. Gleiches gilt selbstverständlich auch für einen punktförmigen Laserstrahl, der mit hoher Geschwindigkeit über die entsprechende Fläche gescannt wird.

Bei dem bekannten Verfahren ist die Verwendung der Maske mitunter nachteilig, da sie eine Justierung erforderlich macht und infolge dessen der Bauteildurchsatz gering ist.

Der vorliegenden Erfindung liegt daher die Aufgabe zugrunde, eine Möglichkeit vorzuschlagen, mit der ein Zusammenfügen von strukturierten Werkstücken gemäß dem eingangs erwähnten Durchstrahlschweißverfahren mittels Laser mit hohem Durchsatz realisiert werden kann.

Diese Aufgabe wird erfindungsgemäß mit dem Verfahren mit den Merkmalen des Hauptanspruchs gelöst. Weitere vorteilhafte Ausgestaltungen sind den Unteransprüchen zu entnehmen.

Nach dem erfindungsgemäßen Verfahren wird mittels einer Optik der Laserstrahl derart fokussiert, dass die Energiedichte im Bereich der Kontaktflächen maximal wird. Je nach Anwendungsfall wird dabei die Optik durch entsprechende Auswahl der Linsen so gewählt, dass der Querschnitt des Bereiches größer oder kleiner wird. Durch diese Einstellung erfolgt das Schmelzen des Materials des zweiten Werkstückes nur an den Kontaktflächen, obwohl die Kontaktflächen als auch die tieferliegenden Oberflächenbereiche durch den Laserstrahl bestrahlt werden. Dadurch werden die Werkstücke nur im Bereich der Kontaktflächen aufgeschmolzen und miteinander verbunden. Es erfolgt somit eine strukturierte Verschweißung der Kontaktflächen ohne Maske. Bei dem Laserstrahl ist es wichtig, dass der Bereich höherer Energiedichte ausreichend ist, um eine Verschmelzung der beiden Werkstücke zu erreichen, und in Ausbreitungsrichtung von der Laserquelle gesehen, einstellbar ist. Für eine gewünschte Verschweißung ist es wichtig, dass die Strukturhöhe d sehr viel größer als die Höhe h des Bereichs maximaler Energiedichte. Dann kann beispielsweise bei einem kurzen Bereich hoher Energiedichte die Struktur zumindest in dem zweiten, für den Laserstrahl nicht transparenten Werkstück entsprechend klein gewählt werden, ohne dass ein Aufweichen der tieferliegenden Strukturen erfolgt, da hier die Energiedichte nicht ausreichend ist. Im günstigsten Fall ist dieser Bereich maximaler Energiedichte lediglich eine Fläche.

Vorteilhafterweise wird ein Laserstrahl mit einer Strahltaille mit hoher Energiedichte verwendet, da dies eine hohe Energiedichte nur in einem kleinen Bereich entsprechend den vorstehend erwähnten Vorgaben ermöglicht. Vorzugsweise wird die Höhe h und die Breite b der Strahltaille in Abhängigkeit von der zu verschweißenden Bereiche in dem strukturierten zweiten, für den Laserstrahl nicht transparenten Werkstück eingestellt.

Gemäß einer weiteren Ausbildung des Verfahrens wird der Laserstrahl mittels einer Zylinderlinse erzeugt. Der linienförmige Laserstrahl wird durch eine zylindrische konvergente Linse nur auf der Fokusebene der Linse abgebildet. Das bedeutet, dass die Energiedichte der Laserstrahlung entlang der Ausbreitungsrichtung von der Distanz zur Laserquelle abhängig ist. Die maximale Energiedichte befindet sich in der Strahltaille. Die Geometrie dieser Strahltaille (Höhe h und Breite b) ist von der optischen Apertur und der Brennweite der Linse abhängig. Je größer der Konvergenzwinkel und je kürzer die Brennweite ist, desto dünner ist die Strahltaille. Die Dicke der Strahltaille kann auch als Dicke der scharfen Abbildungszone bezeichnet werden.

Bei einem strukturierten Werkstück wird die Schweißnahtfigur nur von der flächigen Struktur auf der Fokusebene bestimmt, wenn der Höhenunterschied der Strukturen deutlich größer ist als die Dicke der Strahltaille.

Nachfolgend wird die Erfindung anhand von Ausführungsbeispielen in Verbindung mit den begleitenden Zeichnungen näher erläutert. Es stellen dar:
- Figur 1: eine Prinzipskizze zum Verschweißen von zwei Kunststoffwerkstücken;
- Figur 2: die vergrößerte Darstellung einer Strahltaille;
- Figur 3: der prinzipielle Aufbau mit einen Standard-diodenlaser; und
- Figur 4: der prinzipielle Aufbau mit der Zuführung der Laserstrahlen über einen Lichtleiter.

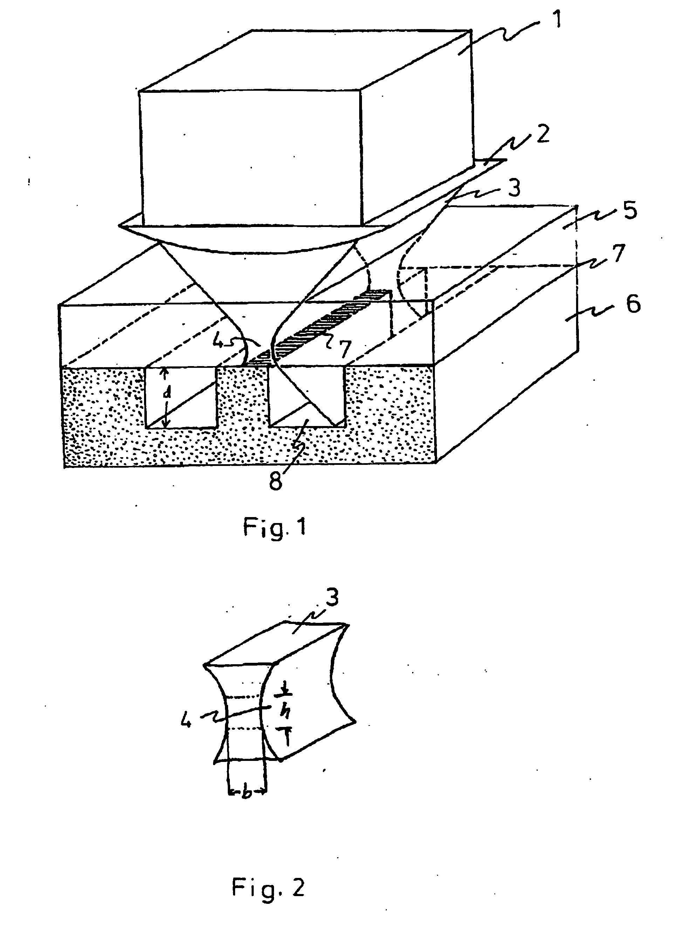

Figur 1 zeigt in vergrößerter Darstellung einen aufbereiteten Laserstrahl 1, der auf eine Zylinderlinse 2 trifft. Die Zylinderlinse 2 formt den Laserstrahl 1 in einen Laserstrahl 3 um, der in Ausbreitungsrichtung in der Energiedichte variiert. Dies bewirkt, dass der Laserstrahl im Längsschnitt nicht durchgängig die gleiche Breite bzw. den gleichen Durchmesser aufweist, wobei sich die Bereiche mit hoher Energiedichte durch einen gegenüber den Bereichen mit geringerer Energiedichte geringeren Durchmesser bzw. geringere Strahlbreite auszeichnen. In dem Ausführungsbeispiel ist der Laserstrahl 3 so geformt, dass er eine Strahltaille 4 aufweist. Der Laserstrahl 3 ist in der Figur 2 im Bereich der Strahltaille 4 noch einmal vergrößert dargestellt. In der Figur ist die Breite b und die Höhe h der Strahltaille 4 gezeigt, die durch entsprechende optische Maßnahmen beeinflusst werden kann. Mit der Breite b wird die geringste Breite des Laserstrahls 3 definiert. Mit der Höhe h die Länge des Bereichs mit der geringsten Breite b.

Die Figur 1 zeigt des Weiteren ein erstes für den Laserstrahl transparentes Werkstück 5 und ein darunter befindliches zweites Werkstück 6, welches für die Laserstrahlung nicht transparent ist. In der Figur wurde zur Veranschaulichung das Werkstück 5 durchsichtig gezeichnet, wobei dies nicht bedeutet, dass dieses Werkstück nicht ebenfalls eingefärbt sein kann. Das Werkstück 6 weist eine Struktur mit gegenüber den Kontaktflächen 7 tieferliegenden Oberflächenbereichen 8 auf, die nicht von dem Laserstrahl 3 aufgeweicht werden sollen. Das transparente Werkstück 5 kann entgegen der Darstellung in der Figur 1 ebenfalls eine Struktur aufweisen, wie es bereits im Stand der Technik gezeigt ist. Dabei darf allerdings keine Oberfläche des unteren Werkstückes 6 nicht von dem oberen Werkstück 5 bedeckt sein, da dies sonst zu Fehlerhitzungen führt. Aus der Figur 1 ist erkennbar, dass der Bereich hohe Energiedichte um die Strahltaille 4 sich im Bereich der Kontaktflächen 7 befindet. Durch die Formung des Laserstrahls 3 ist die Energiedichte im Bereich der tieferliegenden Oberflächenbereiche 8 nicht ausreichend, um diese zu schmelzen. Es folgt damit nur eine Aufweichung im Bereich der Kontaktflächen, so dass in diesem Bereich die beiden Werkstücke 5, 6 in der bekannten Art und Weise verbunden werden. Im Gegensatz zum Stand der Technik macht es daher nichts aus, wenn der Laserstrahl auch die tieferliegenden Oberflächenbereiche bestrahlt. Infolgedessen ist eine Maske nicht erforderlich. Wesentlich ist, dass die Werkstücke 5, 6 mit ihrer Kontaktfläche 7 in dem Bereich der Strahltaille 4 angeordnet werden. Durch Verändern der Höhe h und der Breite b kann der Laserstrahl auf die geometrischen Formen der Strukturen in den Werkstücken 5, 6 angepasst werden.

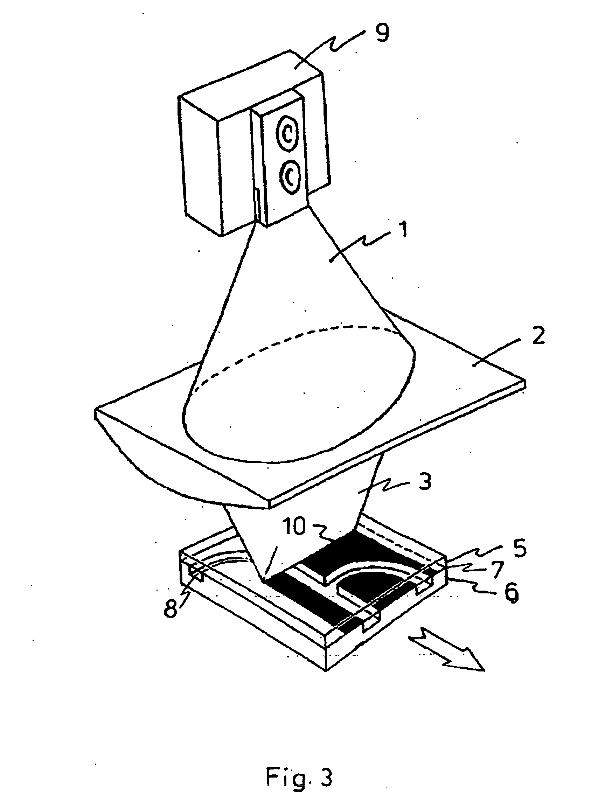

Figur 3 zeigt in schematischer Darstellung einen Standarddiodenlaser 9, der einen kegelförmigen Laserstrahl 1 auf die Zylinderlinse 2 bringt. Wie im Zusammenhang mit der Figur 1 beschrieben, formt die Zylinderlinse 2 den Laserstrahl 1 in den Laserstrahl 3 um, der dann über den zu verschweißenden Oberflächenbereich 10 ohne Rücksicht auf die tieferliegenden Oberflächenbereiche 8 bewegt wird. Es wird darauf hingewiesen, dass der zu verschweißende Oberflächenbereich 10 nicht mit der gesamten Oberfläche der Werkstücke übereinstimmen muss. Es ist auch klar, dass es letztlich auf die Relativbewegung zwischen den Werkstücken 5, 6 und dem Laserstrahl 3 ankommt. In dem Ausführungsbeispiel werden die Werkstücke 5, 6 bewegt.

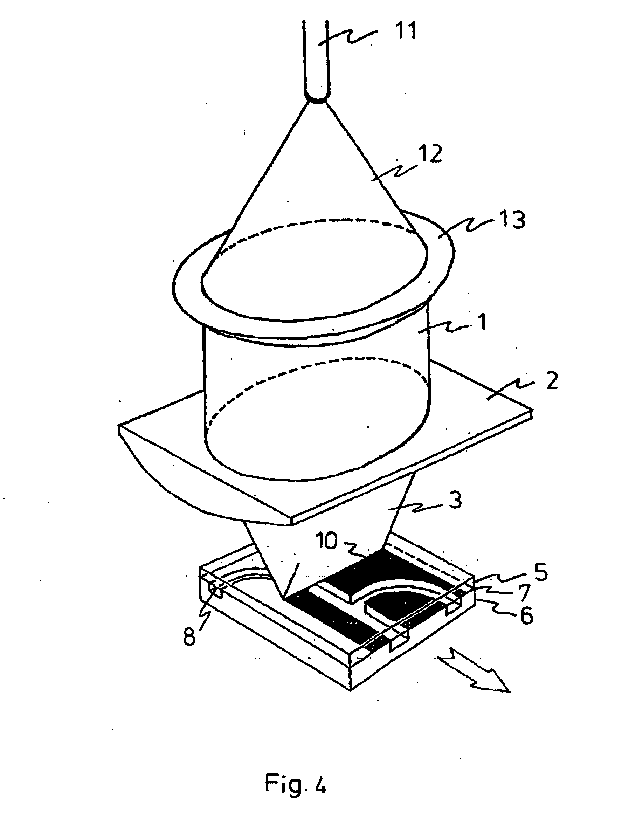

In dem Ausführungsbeispiel gemäß Figur 4 wird der aus einem Lichtleiter 11 kegelförmig austretende Laserstrahl 12 über eine sphärische konvergente Linse 13 zu der Zylinderlinse 2 geführt.

In dem Ausführungsbeispiel werden ein linienförmiger Laserstrahl und die Werkstücke relativ zueinander bewegt. Entsprechend kann auch ein Laserpunkt an Stelle der Laserlinie erzeugt werden, der dann für eine flächige Bestrahlung entsprechend geführt werden muss.

## Patentansprüche

1. Laserfügeverfahren zum Verbinden von verschiedenen Werkstücken (5, 6) aus Kunststoff oder Kunststoff mit anderen Materialien, wobei das obere, der Laserquelle zugewandte Werkstück (5) aus einem für den Laserstrahl (3) transparenten Material und das zweite Werkstück (6) aus einem für den Laserstrahl (3) absorbierenden Material besteht, so dass die aneinandergrenzenden Kontaktflächen (7) der beiden Werkstücke (5, 6) aufschmelzen und bei der anschließenden Abkühlung unter Druck sich miteinander verbinden, wobei mindestens das zweite Werkstück (6) eine dem anderen Werkstück (5) zugewandte strukturierte Oberfläche mit tieferliegenden Oberflächenbereichen (8) aufweist, und der Laserstrahl (3) und die Bauteile relativ zueinander bewegt werden, **dadurch gekennzeichnet, dass**
der Laserstrahl (3) mit einer Optik derart fokussiert wird, dass die Energiedichte im Bereich der Kontaktflächen (7) maximal wird und das Schmelzen des Materials des zweiten Werkstückes (6) nur an den Kontaktflächen (7) erfolgt, wobei die Kontaktflächen (7) als auch die tieferliegenden Oberflächenbereiche (8) von dem Laserstrahl bestrahlt und die Werkstücke (5, 6) nur im Bereich der Kontaktflächen (7) aufgeschmolzen und miteinander verbunden werden.

2. Verfahren nach Anspruch 1, **dadurch gekennzeichnet, dass** die Höhe (h) und die Breite (b)der durch die Fokussierung entstandenen Strahltaille (4) in Abhängigkeit der Struktur der zu verschweißenden Werkstücke (5, 6) eingestellt wird.

## Claims

1. A laser joining method for connecting different workpieces (5, 6) made of plastic or for connecting plastic to different materials, the upper workpiece (5), facing the laser source, consisting of a material which is transparent for the laser beam (3) and the second workpiece (6) consisting of a material which is absorbent for the laser beam (3), so that the mutually adjacent contact surfaces (7) of the two workpieces (5, 6) melt and bond to one another during the subsequent cooling under pressure, at least the second workpiece (6) having a structured surface with lower-lying surface regions (8), facing the other workpiece (5), and the laser beam (3) and the components being moved in relation to one another, **characterised in that** the laser beam (3) is focused by an optical system in such a way that the energy density is at a maximum in the region of the contact surfaces (7) and the melting of the material of the second workpiece (6) takes place only at the contact surfaces (7), the contact surfaces (7) and the lower-lying surface regions (8) being irradiated by the laser beam and the workpieces (5, 6) being melted and connected to one another only in the region of the contact surfaces (7).

2. The method as claimed in claim 1, **characterised in that** the height (h) and the width (b) of the beam constriction (4) produced by the focusing is set in accordance with the structure of the workpieces (5, 6) to be welded.

## Revendications

1. Procédé de soudage au laser pour assembler différentes pièces (5, 6) en plastique, ou en plastique avec d'autres matériaux, dans lequel la pièce supérieure (5) tournée vers la source laser est constituée d'un matériau transparent au rayon laser (3) et la deuxième pièce (6) est constituée d'un matériau absorbant pour le rayon laser (3), de sorte que les surfaces de contact (7) contiguës des deux pièces (5, 6) entrent en fusion et se soudent lors du refroidissement sous pression qui suit, dans lequel au moins la deuxième pièce (6) présente une surface structurée tournée vers l'autre pièce (5) avec des zones de surface situées plus profond ou en retrait (8), et le rayon laser (3) et les composants sont déplacés l'un par rapport à l'autre, **caractérisé par le fait que** le rayon laser (3) est focalisé avec une optique de telle manière que la densité d'énergie au niveau des surfaces de contact (7) dévient maximale et que la fusion du matériau de la deuxième pièce (6) ne se produit qu'aux surfaces de contact (7), les surfaces de contact (7) aussi bien que les zones de surface situées plus profond (8) étant irradiées par le rayon laser et les pièces (5, 6) n'entrant en fusion et n'étant soudées ensemble qu'au niveau des surfaces de contact (7).

2. Procédé selon la revendication 1, **caractérisé par le fait que** la hauteur (h) et la largeur (b) du col de faisceau (4) résultant de la focalisation sont réglées en fonction de la structure des pièces (5, 6) à souder.
